# EUROPEAN PATENT SPECIFICATION

(11) **EP 1 545 855 B1**
(45) Date of publication and mention of the grant of the patent: **14.03.2007**
(21) Application number: 02758190.9
(22) Date of filing: 11.09.2002
(51) Int. Cl.: B29C 44/18

(54) **METHOD AND PLANT FOR MANUFACTURING LENGTHS OF PRE-INSULATED PIPES**
VERFAHREN UND ANLAGE ZUR HERSTELLUNG VON LÄNGEN VORISOLIERTER ROHRE
PROCEDE ET INSTALLATION DE FABRICATION DE LONGUEURS DE TUYAUX PRE-ISOLES

(43) Date of publication of application: 29.06.2005
(73) Proprietor: A/S Star Pipe, 7000 Fredericia (DK)
(72) Inventor: RASMUSSEN, Jan, DK-7000 Fredericia (DK)
(74) Representative: Tonnesen, Bo
(86) International application number: PCT/DK2002/000590
(87) International publication number: WO 2004/024411

(56) References cited:
- EP-A- 0 380 163
- WO-A-00/47387
- DE-U- 29 903 721
- GB-A- 1 083 185
- US-B1- 6 199 593

## Description

### FIELD OF INVENTION

The present invention relates to a method and plant for manufacturing lengths of pre-insulated pipes which are widely used to transport hot or cold fluids with the main object of doing so while maintaining the temperature of the fluid essentially constant.

Such insulated pipes can comprise one or several service pipes embedded in an insulating material e.g. a foam material, which is able to maintain its low thermal conductivity for many years.

One area of importance is service pipes for district heating systems but the general usability of such pipes also in other business areas, e.g. transporting hot fluids in industrial plants, is obvious to a skilled person.

District heating systems wherein water of usually up to 130 °C will be circulated are very dependent on good and long-lasting insulating properties so it is important to manufacture pipes with both a good quality foam and a uniform low thermal conductivity.

In district heating systems insulated pipes are being used to transport the hot water from a central heating plant to the individual households, and the pipes are usually placed directly in the soil or in underground ducts, which implies that a protective casing is normally required to encase the service pipe(s) and the insulating foam in order to make the insulated pipe tamperproof and impervious to water and gas. Moreover, the district heating pipes shall comply with the requirements for at least 30 years of service lifetime; preferably at least 50 years.

In Europe the legislation governing the quality of district heating pipes is essentially put in the hands of standardization organizations e.g. CEN, which has issued the standard EN253, Pre-insulated bonded pipe systems for underground hot water networks - Pipe assembly of steel service pipes, polyurethane thermal insulation and outer casing of polyurethane.

Accordingly, insulated pipes with uniform foam thickness and density are essential for the economy of district heating systems, and the foam cells should contain gas with as low thermal conductivity as possible.

### BACKGROUND ART

In order to produce uniform pre-insulated pipes there are several manufacturing methods to choose among, where in this case only the mix-pull technique will be discussed, as this technique serves as the chosen manufacturing method related to the present invention. The mix-pull technique - or Misch-Ziehkopf-Technik - is known from e.g. WO 00/47387 in the name of Bayer Aktiengesellschaft and Hennecke GmbH.

WO 00/47387 describes a method for manufacturing pre-insulated pipes comprising an inner pipe and an outer pipe and between them an intermediate annular space being filled with insulating polyurethane (PUR) foam, while the inner and outer pipes are being mechanically held in a tight grip securing the pipes in a stretched, concentric position to each other during the foaming process. The foaming process is making use of the mix-pull technique according to which foaming of the insulating foam material is carried out in the space between the inner and outer pipes concurrently with a lance with the mixer head being moved in axial direction relative to the pipe in a controllable manner.

Moreover, WO 00/47387 describes a way to avoid thermal bridges in the pre-insulated pipes by introducing a spacer of same material as the insulating foam around the pipe and midways between the end supports in order to compensate possible bending of the pipe due to own weight and the progressively injected foam. Formerly the spacers used were made of other materials with less favorable thermal conductivity.

The mix-pull technique implies that at first a lance carrying the mixer head is arranged with the inner pipe passing through the middle of the head and is moved towards the one end of the pipe, where usually an end stop or closure member is provided, which end stop closes the radial spacing between the inner and outer pipes. In the mixer head is provided a chamber comprising nozzles delivering the foam components to be mixed in the chamber and to flow out in the space between the end stop and the front of the mixer head where the resulting foam will cure with a speed controlling the mixer head withdrawal. The state of the art mixer heads contain a mixing chamber and foaming nozzles, wherein the nozzles are arranged perpendicular to the pipe axis which makes the design of the mixer head too bulky in relation to the space available.

The process can also involve use of two mixer heads being withdrawn in opposite directions away from a central annular spacer member of PUR foam which becomes embedded in the injected foam.

DE 299 03 271 U1 describes a method of insulating pipes, especially district heating pipes, wherein the space between inner and outer pipes is filled with foam, while a slidable distance element is gradually slid away from one position to a second position along the pipes and carrying the foam nozzles. However, the foam components are charged from a foam pump into the foam space. No further mixing before arriving in the space is taught.

US 6,199,593 describes a process of introducing foam to an annulus between a carrier pipe and a jacket pipe running in parallel, and wherein a slidable holder is slid away from a closure part while carrying foam mixture heads. The foam mixture is delivered to the mixture heads by conventional apparatus, e.g. metering pumps.

### OBJECT OF THE INVENTION

Its is the object of the invention to provide a method which aims at providing foam with improved thermal conductivity characteristics.

The invention should also provide a plant to be used with said method, which plant has the object of providing a compact design of the mixer head and to secure a laminar flow in order to create the best possible call structure of the foam avoiding confinement of atmospheric air.

### SUMMARY

Avoidance of spacer members is obtained by the method according to the invention which shows the mixer head being one support for the pipe during mixing and ejecting the foam components into the space delimited radially by the outer surface of the pipe and the inner surface of the casing, and axially by the first closure member and the mixer head, the mixer head being pulled axially away from the closure member with such a speed during the foaming process that the foam will cure continuously, thereby providing a second support for the casing in essentially a constant distance from the mixer head and preventing unacceptable centerline deviation.

The said method makes it possible to manufacture an insulated pipe, wherein spacer members are not needed, because the section of pipe situated at the active foaming space is continuously being supported at the one end by the first closure member or the progressing front of cured foam material and in the other end is slidably supported by the mixer head. This means that an almost constant, short length of pipe and casing with little chance to bend will stay unsupported in the zone of still flowing foam mixture in front of the mixer head.

When the foaming process Is stopped, the finished pipe can shortly after be removed so that a new pipe can advantageously be produced by means of the production plant and thereby a good capacity is secured.

According to the invention, a method is provided, wherein a very efficient mixing of foam components into a reaction product is obtained by the characterizing features of claim 1.

In a preferred method according to the invention a counterpressure is being exerted on the foaming process by supplying a compressed gas into the space, where the foaming process is executed. Such counterpressure is very favorable in providing for more blowing agent to be injected with the foam components, and consequently providing a fine celled foam structure with maximum content of gas with low thermal conductivity, which is desirable for good ageing characteristics of the insulation material. The supplied gas could preferably be a gas with low thermal conductivity, e.g. Ar.

In an advantageous embodiment of the invention the insulating foam is a PUR foam provided by thorough mixing of an isocyanate and a polyol containing a blowing agent, e.g. cyclopenthane or a CFC gas.

In another advantageous embodiment of the invention the insulating foam is a PIR foam provided by thorough mixing of an isocyanate and a polyol containing a blowing agent, e.g. cyclopenthane or a CFC gas. PIR foam has usually a bad flowability but given the short flow path this foam can be used, and it is a very useful material by accepting even very high temperatures.

In a further preferred embodiment of the invention an initial tension is exerted on the pipe thereby providing it with a slightly curved shape in order to counterbalance the foam pressure between service pipe and casing, or said tension can be exerted on the casing.

Alternatively, the method according to the invention can let an initial torque be exerted on the mixer head or a part thereof thereby maintaining the pipe and the casing in a cylindrical shape during the foaming process.

By using a plant according to the invention which is characterized in the nozzles in the mixing chamber pointing in the axial direction of the pipe and casing, and by the reaction product being delivered as a laminar flow through a channel connecting the mixer chamber and the said foaming space, a more compact design of the mixer head becomes possible and provides for use in manufacturing pre-insulated pipes with little radial space between the inner pipe and the casing.

In a preferred embodiment of the mixer head according to the invention the mixer head is comprised of an annular house with same rotational axis as the pipe and the casing, and is essentially showing the same cross section as exists between the pipe and the casing, and the radially inner surface of the mixer head is serving as a sliding centering support for the casing about the pipe for the duration of the foaming process. This design guarantees a stable support of the pre-insulated pipe throughout the foaming process in that the point of support moves away from the supporting front of curing foam at the same progression speed as do the foam so that the free span of the pipe is essentially constant and no noticeable bending will occur.

In a modification to the said mixer head design the radially inner surface of the mixer head is provided with a separate guide sleeve, which constitutes the sliding centering support on the pipe, wherein the inner diameter of the guide sleeve is selected corresponding to the outer diameter of the chosen pipe, and the centering guide is exchangeable. The result of this is a strongly versatile support by the mixer head in that only the choice of sleeve needs to be adjusted to fit a range of pipe diameters.

In a preferred embodiment of the plant according to the invention at least one piping is provided for supplying a blowing agent e.g. cyclopenthane or a CFC gas, which gas enters the mixing chamber and intermixes with the foam components coming from the nozzles. This feature makes it possible to increase the amount of blowing agent in the foam in order to improve the insulating properties of the resulting pre-insulated pipe.

In a further advantageous embodiment of the plant according to the invention at least one piping is provided for supplying a gas of low thermal conductivity e.g. Ar into the foaming space thereby exerting a counterpressure on the foaming process This feature makes it possible to control the foaming process in order to increase the amount of blowing agent in the foam so the insulating properties of the resulting pre-insulated pipe is improved. Furthermore, the counterpressure also provides for the reaction product to flow from the mixing chamber in a laminar flow, which hinders air becoming confined in the foam as cured.

In a further embodiment of the plant according to the invention and comprising pumps for delivering the foam components to the respective nozzles in the mixer head, it is advantageous to have the pumps connected to the mixer head through rigid piping, while the mixer head together with pumps and piping for delivering the foam components are slideable as one unit along the service pipe. This feature makes the plant more compact and less vulnerable to become entangled with other components.

Embodiments of the invention will now be described, by way of example only, with reference to the accompanying drawings in which:
FIG.1 is a schematic plan view of a plant according to the invention,
FIG.2 is a detailed cross sectional view of a mixer head according to the invention, and
FIG.3 is a detailed cross sectional view of another mixer head according to the invention.

### DETAILED DESCRIPTION

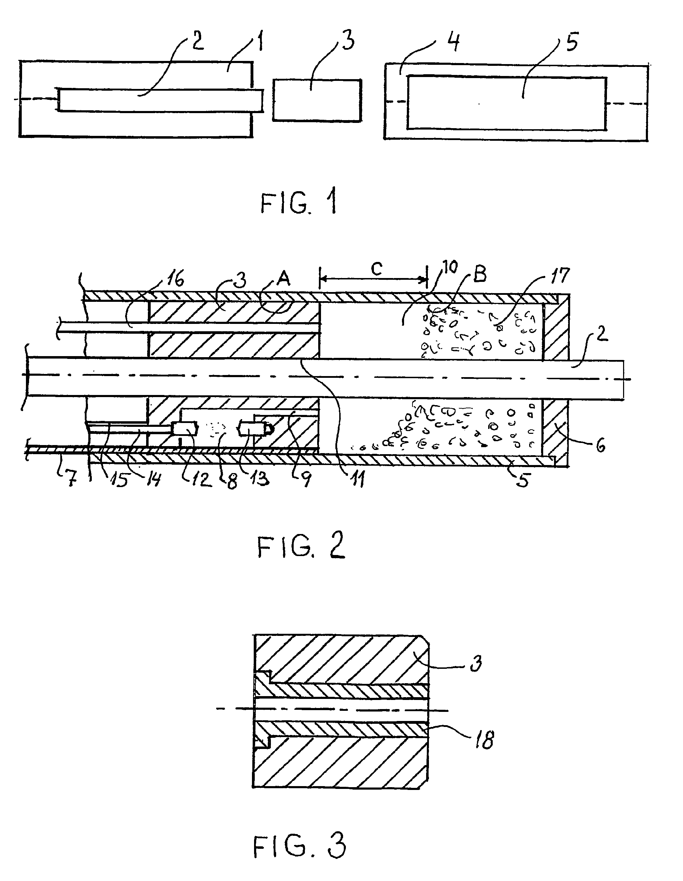

In Fig. 1 is shown a layout of a plant to manufacture lengths of pre-insulated pipes using the method according to the invention. The plant comprises a first elongated slide 1 for at least one inner pipe 2 preferably made of steel to be moved towards a mix-pull head 3. In axial continuation of the first slide 1 is shown a second elongated fixture slide 4 adapted to contain a casing 5 preferable made of polyethylene (PE) material and having a larger inner diameter than the outer diameter of the mixer head 3.

The method according to the invention makes use of the mix-pull technique - also called Mischkopf-Zieh-Technik (MZT) - whereby a length of a pre-insulated pipe comprising at least one inner service pipe 2 with a surrounding protective casing 5 and an intermediary layer of insulating foam material, e.g. a PUR or PIR foam material, is manufactured and wherein the foaming of the insulating foam material is carried out in the space between the at least one pipe 2 and the surrounding casing 5 concurrently with the mixer head 3 being moved in axial direction relative to the pipe 2 in a controllable manner, and the casing 5 is supported centrally about the pipe 2.

Referring also to Figure 2 and following the manufacturing method according to the invention a length of a usually preheated pipe 2 is delivered to the first slide 1 while at the same time a corresponding casing 5 is delivered to the preheated fixture slide 4 and is axially aligned with the pipe 2.

Next the pipe 2 is gripped by a carrier on a transportation device of common design (not shown) bringing the pipe axially forward through an opening in the mixer head 3, which is situated between the pipe 2 and the casing 5, and there the mixer head 3 is by optional means (not shown) locked or clamped on the pipe at a suitable distance from the front end and together they are moved into the casing 5. The casing 5 itself is fixed in the fixture slide 5 and a first closure member 6 or lid is moved into and held in engagement with the one end of the pipe 2 and casing 5 providing a tight closure of the opening between the pipe 2 and the casing 5 while also supporting said casing 5. Thereafter the mixer head 3 is released from the pipe 2 and the foaming process can begin.

The mixer head 3 is shown in details but out of scale in figure 2, where the head 3 is attached to a lance 7 for being pushed or pulled in axial directions. Further the head 3 is in the shape of an annular house in which is contained at least one mixing chamber 8 with one or more channels 9 connecting the mixer chamber 8 and the foaming space 10, the annular house having same rotational axis as the pipe 2 and the casing 5 and essentially showing the same cross section as exists between the pipe 2 and the casing 5. An axial opening 11 in the mixer head 3 fits around the pipe 2 and the mixer head 3 acts as a first support A for the casing 5, while the end of the casing 5 adjacent to the closure member 6 is initially supported by said member 6. In the mixing chamber 8 are provided axially oriented nozzles 12, 13 ejecting towards each other the foam components, a polyol and an isocyanate, respectively. The foam components are fed to the nozzles 12, 13 from high-pressure pumps (not shown) through respective piping 14, 15 and flow as a reaction product through the channel 9 into the foaming space 10, where the exoterm foaming process occurs developing the insulating foam 17.

Moreover the mixer head 3 could be provided with piping (not shown) supplying additional blowing agent e.g. into the mixing chamber 8.

An advantageous feature according to the invention is the provision of piping 16 passing through the mixer head 3 and opening into the foaming space 10 and supplying a compressed gas, preferably a gas of low thermal conductivity e.g. Ar in said space 10.

According to the method of the invention foam components are pumped through the piping 14, 15 to respective nozzles 12, 13 and intermix thoroughly before the reaction product continues through the channel 9 into the foaming space 10, where the foam starts building up and filling the said space 10. Due to the fast curing reaction product building up against the closure member 6 a front of curing foam moves in the direction of the mixer head 3, and the mixer head 3 is pulled away along the pipe 2 with such a speed, that there is maintained an almost constant distance C to the foam front, which due to its fast curing capability is able to provide support B for the foam-filled part of the casing 5 while the mixer head 3 constitutes a sliding support for the casing 5 about the pipe 2.

During the foaming process a compressed gas, preferably a gas with low thermal conductivity e.g. Ar, is supplied to the foaming space 10 through the piping 16, thereby providing a counterpressure to control the foaming and making it possible to supply even more blowing agent, so the foam 17 can be produced with more of the preferred gas in the foam cells than normally permitted.

As the mixer head 3 reaches the trailing end of the pipe 2, it will be fixed to the pipe and shortly after the delivery of reaction product into the foaming chamber 10 is shut off, and after a preset curing time the mixer head 3 is released from the pipe 2 and the pre-insulated pipe as formed is removed from the plant and a new production cycle can begin.

In an advantageous embodiment of the invention an initial tension can be exerted on the pipe 2, thereby providing it with a slightly curved shape in order to counterbalance the foam pressure between service pipe and casing.

In another advantageous embodiment of the invention an initial tension can be exerted on the casing 5, thereby providing it with a slightly curved shape in order to counterbalance the foam pressure between service pipe and casing.

In a further advantageous embodiment of the invention an initial torque can be exerted on the mixer head 3 or a part thereof, thereby maintaining the pipe 2 and the casing 5 in a uniform radial distance from each other during the foaming process

In the event of manufacturing pre-insulated pipes with a plurality of service pipes it is obvious to a skilled person, that the pipes should be held together in positions which are optimal for the insulation effect.

The fact that a compressed gas is being used to control the foaming process through counterpressure also acts in favor of maintaining a stable laminar flow of reaction product from the mixing chamber into the foaming space, and by choosing a gas with low thermal conductivity e.g. Ar, no problem arises from some of said gas being confined in the foam as formed.

In order to obtain better versatility of the mixer head 3 according to the invention, a preferred modification shows the radially inner surface of the mixer head 3 being provided with a separate guiding sleeve 18 as shown in figure 3, which sleeve 18 constitutes the sliding centering support for the pipe 2, wherein the inner diameter of the sleeve 18 is selected corresponding to the outer diameter of the chosen pipe and said sleeve 18 is exchangeable.

In an advantageous embodiment of the plant according to the invention there are provided pumps (not shown) and rigid pipings 14, 15, 16 for delivering gas and foam components to the foaming process, which pumps and pipings 14, 15, 16 are connected to the mixer head 3 and lance 7 such that they are slidable as one unit along the service pipe 2. This embodiment prevents to a large degree entanglement of machine parts with each other or neighbor parts and also cleaning will become easier.

Apart from making use of only one mixer head 3, also plants with two mixer heads 3 can be put into use without leaving the frame of the invention.

In addition a skilled person could create many different solutions to the way the pipe and/or casing are being stretched during the foaming process but such fixations are not the target of this invention.

## Claims

1. Method for manufacturing a length of pre-insulated pipe according to the mix-pull technique (MZT) and comprising at least one service pipe (2) with a surrounding protective casing (5) and an intermediary layer of insulating foam material (17) wherein foaming of the insulating foam material (17) is carried out in the space (10) between the at least one pipe (2) and the surrounding casing (5) concurrently with the mixer head (3) being moved in axial direction relative to the pipe (2) in a controllable manner, and the casing (5) being supported centrally around the pipe (2), wherein
■ the pipe (2) together with the mixer head (3) is placed in a casing (5)
■ a first closure member (6) is moved into contact with the end of the pipe (2) and provides a closure for the opening between the pipe (2) and the casing (5),
■ the pipe (2) is held in a fixed position,
■ the mixer head (3) ejects the foam components into the space (10) delimited axially by the first closure member (6) and the mixer head (3),
■ the mixer head (3) being pulled axially away from the closure member (6) with such a speed during the foaming process that the foam (17) will cure continuously, thereby providing a support (B) for the casing (5) in essentially a constant distance (C) from the mixer head (3) thereby preventing the pre-insulated pipe from bending
**characterized by**
a further support (A) being provided by the mixer head (3) placed in the casing (5) of slightly larger inner diameter than the outer diameter of the mixer head (3), and
the insulating foam components being fed through pipings (14, 15) into at least one mixer chamber (8) within the mixer head (3) for pre-mixing thereof before ejection into the foaming apace (10).

2. Method according to claim 1, **characterized by** a counterpressure being exerted on the foaming process by supplying a compressed gas into the space (10), in which the foaming process is executed.

3. Method according to claim 2, **characterized by** the supplied gas being a gas of low thermal conductivity e.g. Ar.

4. Method according to any one of the preceding claims **characterized by** a blowing agent e.g. cyclopenthane or a CFC gas being supplied to the reaction product in the mixing chamber (8).

5. Method according to any one of the preceding claims, **characterized by** the insulating foam (17) being a PUR foam provided by thorough mixing of an isocyanate and a polyol containing a blowing agent, e.g. cyclopenthane or a CFC gas.

6. Method according to any one of the preceding claims, **characterized by** the insulating foam (17) being a PIR foam provided by thorough mixing of an isocyanate and a polyol containing a blowing agent, e.g. cyclopenthane or a CFC gas.

7. Method according to one of the previous claims, **characterized by** an initial tension being exerted on the pipe (2) thereby providing it with a slightly curved shape in order to counterbalance the foam pressure between service pipe and casing.

8. Method according to one of the previous claims, **characterized by** an initial tension being exerted on the casing (5) thereby providing it with a slightly curved shape in order to counterbalance the foam pressure between service pipe and casing.

9. Method according to one of the previous claims, **characterized by** an initial torque being exerted on the mixer head (3) or a part thereof thereby maintaining the pipe (2) and the casing (5) in a uniform radial distance from each other during the foaming process.

10. Plant to be used with the method according to any one of the previous claims, which plant is comprised of a first elongated slide (1) for the pipe (2) to be moved towards a mix-pull head (3), and a second elongate slide (4) adapted to contain a casing (5) with a larger inner diameter than the outer diameter of the mixer head (3), said mixer head (3) having at least two nozzles (12, 13) each delivering one foam component into a mixing chamber (8), whereby prior to the foaming process getting started the reaction product in the mixing chamber (8) is fed into the space (10) to be filled with foam, **characterized by** the nozzles (12, 13) in the mixing chamber (8) being pointed towards each other in the axial direction of the pipe (2) and casing (5), and by the reaction product being delivered as a laminar flow through a channel (9) connecting the mixing chamber (8) and the said foaming space (10).

11. Plant according to claim 10, **characterized by** the mixer head (3) being comprised of a mixing chamber (8), and essentially showing the same cross section as exists between the pipe (2) and the casing (5), and by the radially inner surface (11) of the mixer head (3) serving as a sliding centering support for the casing (5) relative to the pipe (2) for the duration of the foaming process.

12. Plant according to claim 11, **characterized by** the radially inner surface (11) of the mixer head being provided with a separate guide sleeve (18), which constitutes said sliding centering support on the pipe (2), wherein the inner diameter of the guide sleeve (18) is selected corresponding to the outer diameter of the chosen pipe (2), and the centering guide sleeve (18) is exchangeable.

13. Plant according to one of claims 10-12, **characterized by** at least one piping being provided for supplying a blowing agent, e.g. cyclopenthane or a CFC gas, which gas enters the mixing chamber (8) and intermixes with the foam components coming from the nozzles (12, 13).

14. Plant according to one of claims 10-13, **characterized by** at least one piping (16) being provided for supplying a gas of low thermal conductivity, e.g. Ar, into the foaming space (10) thereby exerting a counterpressure on the foaming process.

15. Plant according to claims 10-14, and further comprising pumps for delivering the foam components to the respective nozzles (12, 13) in the mixer head (3), **characterized by** said pumps being connected to the mixer head (3) through rigid piping (14, 15, 16), and the mixer head (3) together with pumps and piping for delivering the foam components being slideable as one unit along the service pipe (2).

## Patentansprüche

1. Verfahren zur Herstellung einer Länge von vorisoliertem Rohr nach der Mischkopf-Zieh-Technik (MZT) und umfassend mindestens ein Dienstrohr (2) mit einem umgebenden schützenden Gehäuse (5) und einer zwischenliegenden Schicht von isolierendem Schaummaterial (17), wobei das Schäumen des isolierenden Schaummaterials (17) in dem Raum (10) zwischen dem mindestens einen Rohr (2) und dem umgebenden Gehäuse (5) durchgeführt wird, wobei gleichzeitig der Mischkopf (3) in axialer Richtung relativ zum Rohr (2) auf eine kontrollierte Weise bewegt wird und das Gehäuse (5) mittig um das Rohr (2) gestützt wird, wobei
• das Rohr (2) zusammen mit dem Mischkopf (3) in ein Gehäuse (5) platziert wird,
• ein erstes Verschlusselement (6) mit dem Ende des Rohrs (2) in Kontakt bewegt wird und einen Verschluss zum Öffnen zwischen dem Rohr (2) und dem Gehäuse (5) bereitstellt,
• das Rohr (2) in einer festen Position gehalten wird,
• der Mischkopf (3) die Schaumbestandteile in den axial vom ersten Verschlusselement (6) und dem Mischkopf (3) begrenzten Raum ausstößt,
• wobei der Mischkopf (3) mit einer solchen Geschwindigkeit während des Schäumungsvorgangs axial weg von dem Verschlusselement (6) gezogen wird, dass der Schaum (17) durchgehend aushärtet, wodurch eine Stütze (B) für das Gehäuse in einem im Wesentlichen konstanten Abstand (C) vom Mischkopf (3) bereitgestellt wird und **dadurch** das vorisolierte Rohr am Biegen hindert,
**dadurch gekennzeichnet, dass**
• eine weitere Stütze (A) von dem Mischkopf (3) bereitgestellt wird, der in das Gehäuse (5) mit geringfügig größerem Innendurchmesser als dem Außendurchmesser des Mischkopfs (3) platziert wird, und die isolierenden Schaumbestandteile durch Leitungen (14, 15) in mindestens eine Mischkammer (8) im Mischkopf (3) geführt werden, um sie vor dem Ausstoß in den Schäumungsraum (10) vorzumischen.

2. Verfahren nach Anspruch 1, **dadurch gekennzeichnet, dass** ein Gegendruck auf den Schäumungsvorgang ausgeübt wird, indem ein komprimiertes Gas in den Raum (10) eingeführt wird, in welchem der Schäumvorgang ausgeführt wird.

3. Verfahren nach Anspruch 2, **dadurch gekennzeichnet, dass** das zugeführte Gas ein Gas geringer Wärmeleitfähigkeit ist, z.B. Argon.

4. Verfahren nach einem der vorangegangenen Ansprüche, **dadurch gekennzeichnet, dass** ein Treibmittel, z.B. Cyclopenthan oder ein FCKW-Gas dem Reaktionsprodukt in der Mischkammer (8) zugeführt wird.

5. Verfahren nach einem der vorangegangenen Ansprüche, **dadurch gekennzeichnet, dass** der Isolierschaum (17) ein PUR-Schaum ist, der durch gründliches Mischen eines Isocyanats und eines Polyols bereitgestellt wird, welches ein Treibmittel, z.B. Cyclopenthan oder ein FCKW-Gas, enthält.

6. Verfahren nach einem der vorangegangenen Ansprüche, **dadurch gekennzeichnet, dass** der Isolierschaum (17) ein PIR-Schaum ist, der durch gründliches Mischen eines Isocyanats und eines Polyols bereitgestellt wird, welches ein Treibmittel, z.B. Cyclopenthan oder ein FCKW-Gas enthält.

7. Verfahren nach einem der vorangegangenen Ansprüche, **dadurch gekennzeichnet, dass** eine anfängliche Spannung auf das Rohr (2) ausgeübt wird, wodurch es mit einer leichten Kurvenform versehen wird, um den Schaumdruck zwischen dem Dienstrohr und dem Gehäuse auszugleichen.

8. Verfahren nach einem der vorangegangenen Ansprüche, **dadurch gekennzeichnet, dass** eine anfängliche Spannung auf das Gehäuse (5) ausgeübt wird, wodurch es mit einer leichten Kurvenform versehen wird, um den Schaumdruck zwischen dem Dienstrohr und dem Gehäuse auszugleichen.

9. Verfahren nach einem der vorangegangenen Ansprüche, **dadurch gekennzeichnet, dass** ein anfängliches Drehmoment auf den Mischkopf (3) oder einen Teil davon ausgeübt wird, wodurch das Rohr (2) und das Gehäuse (5) während des Schäumungsvorgangs in einem gleichmäßigen radialen Abstand voneinander gehalten werden.

10. Anlage zur Verwendung mit dem Verfahren entsprechend einem der vorangegangenen Ansprüche, wobei die Anlage eine erste längliche Gleitführung (1) für das zu einem Mischziehkopf (3) zu bewegende Rohr (2) und eine zweite längliche Gleitführung (4) umfasst, die geeignet ist, um ein Gehäuse (5) mit einem größeren Innendurchmesser als dem Außendurchmesser des Mischkopfes (3) aufzunehmen, wobei der Mischkopf (3) mindestens zwei Düsen (12, 13) aufweist und jede eine Schaumkomponente in eine Mischkammer (8) liefert, wobei vor dem Beginn des Schäumungsvorgangs das Reaktionsprodukt in der Mischkammer (8) in den mit Schaum zu füllenden Raum (10) eingeführt wird, **dadurch gekennzeichnet, dass** die Düsen (12, 13) in der Mischkammer (8) in der axialen Richtung des Rohrs (2) und des Gehäuses (5) aufeinander zu gerichtet sind, und dass das Reaktionsprodukt als laminarer Fluss durch einen Kanal (9) zugeführt wird, der die Mischkammer (8) und den Schäumungsraum (10) verbindet.

11. Anlage nach Anspruch 10, **dadurch gekennzeichnet, dass** der Mischkopf (3) eine Mischkammer (8) umfasst und im Wesentlichen denselben Querschnitt zeigt, der zwischen dem Rohr (2) und dem Gehäuse (5) besteht, und dass die radial innere Oberfläche (11) des Mischkopfs (3) für die Dauer des Schäumungsvorgangs als Gleitzentrierstütze für das Gehäuse (5) relativ zum Rohr (2) dient.

12. Anlage nach Anspruch 11, **dadurch gekennzeichnet, dass** die radial innere Oberfläche (11) des Mischkopfs mit einer separaten Führungshülse (18) versehen ist, die die Gleitzentrierstütze auf dem Rohr (2) darstellt, wobei der Innendurchmesser der Führungshülse (18) entsprechend dem Außendurchmesser des gewählten Rohrs (2) ausgewählt wird und die zentrierende Führungshülse (18) austauschbar ist.

13. Anlage nach einem der Ansprüche 10 bis 12, **dadurch gekennzeichnet, dass** mindestens eine Leitung für die Zufuhr eines Treibmittels, z.B. Cyclopenthan oder eines FCKW-Gases, vorgesehen ist, wobei das Gas in die Mischkammer (8) eintritt und sich mit den von den Düsen (12, 13) kommenden Schaumbestandteilen vermischt.

14. Anlage nach einem der Ansprüche 10 bis 13, **dadurch gekennzeichnet, dass** zumindestens eine Leitung (16) für die Zufuhr eines Gases niedriger Wärmeleitfähgigkeit, z.B. Argon, in den Schäumungsraum (10) vorgesehen ist, wodurch ein Gegendruck auf den Schäumungsvorgang ausgeübt wird.

15. Anlage nach Ansprüchen 10 bis 14, und weiter Pumpen für die Zufuhr der Schaumbestandteile zu den jeweiligen Düsen (12, 13) im Mischkopf (3) umfassend, **dadurch gekennzeichnet, dass** die Pumpen mit dem Mischkopf (3) durch steife Leitungen (14, 15, 16) verbunden sind, und der Mischkopf (3) zusammen mit den Pumpen und den Leitungen für die Zufuhr der Schaumbestandteile als eine Einheit entlang des Dienstrohrs (2) verschiebbar ist.

## Revendications

1. Procédé de fabrication d'une longueur de tube pré-isolé selon la technique du tirage avec mélange (MZT, MZT étant l'acronyme allemand du terme «Mischkopf-Zich-Technik signifiant « technique de tirage à tête de mélange ») et comprenant au moins un tube de service (2) avec un boîtier de protection entourant (5) et une couche intermédiaire de matériau alvéolaire isolant (17), le moussage ou formation d'une texture cellulaire du matériau alvéolaire isolant (17) étant réalisé dans l'espace (10) entre le au moins un tube (2) et le boîtier entourant (5) concurremment avec le fait que la tête de mélange (3) est déplacée en direction axiale par rapport au tube (2) d'une manière contrôlable, et le boîtier (5) étant supporté au centre autour du tube (2), dans lequel procédé :
- le tube (2) en même temps que la tête de mélange (3) est placé dans un boîtier (5),
- un premier organe (6) d'obturation est déplacé au contact avec l'extrémité du tube (2) et assure une fermeture pour l'ouverture entre le tube (2) et le boîtier (5),
- le tube (2) est maintenu dans une position fixe,
- la tête de mélange (3) éjecte les composants de la mousse dans l'espace (10) délimité axialement par le premier organe d'obturation (6) et la tête de mélange (3),
- la tête de mélange (3) est tirée axialement à distance de l'organe d'obturation (6) à une vitesse telle, pendant le processus de moussage que la mousse (17) mousse de façon continue, de sorte à offrir un support (B) pour le boîtier (5) sensiblement à une distance constante (C) de la tête de mélange (3) de sorte à offrir un support (B) pour le boîtier (5) sensiblement à une distance constante (C) de la tête de mélange (3), de sorte à empêcher le tube préisolé de subir une flexion,
**caractérisé en ce qu'**un autre support (A) est constitué par la tête de mélange (3) placée dans le boîtier (5) présentant un diamètre intérieur légèrement supérieur au diamètre extérieur de la tête de mélange (3) et **en ce que** les composants de la mousse isolante sont amenés par des tubes (14, 15) dans au moins une chambre de mélange (8) à l'intérieur de la tête de mélange (3) pour réaliser leur prémélange avant l'éjection dans l'espace (10) de moussage ou de formation d'une texture cellulaire.

2. Procédé selon la revendication 1, **caractérisé en ce qu'**une contre-pression est exercée au cours du processus de moussage en insufflant un gaz comprimé dans l'espace (10) dans lequel le processus de moussage est réalisé.

3. Procédé selon la revendication 2, **caractérisé en ce que** le gaz insufflé est un gaz à faible conductivité, par exemple Ar (argon).

4. Procédé selon l'une quelconque des revendications précédentes, **caractérisé en ce qu'**un agent de soufflage, par exemple du cyclopentane ou un gaz CFC (chlorofluorocarbone) est soufflé vers le produit de réaction dans la chambre de mélange (8).

5. Procédé selon l'une quelconque des revendications précédentes, **caractérisé en ce que** la mousse ou produit alvéolaire isolant(e) (17) est une mousse PUR (polyuréthane) obtenue par un mélange intime d'un isocyanate et d'un polyol (polyalcool) contenant un agent de soufflage, par exemple du cyclopentane ou un gaz CFC (chlorofluorocarbone).

6. Procédé selon l'une quelconque des revendications précédentes, **caractérisé en ce que** la mousse isolante (17) est une mousse PIR obtenue par mélange intime d'un isocyanate et d'un polyol (polyalcool) contenant un agent de soufflage, par exemple du cyclopentane ou un gaz CFC.

7. Procédé selon l'une quelconque des revendications précédentes, **caractérisé en ce qu'**une traction est exercée sur le tube (2) de sorte à lui conférer une forme légèrement courbée afin de contrebalancer la pression de la mousse entre le tube de service et le boîtier.

8. Procédé selon l'une quelconque des revendications précédentes, **caractérisé en ce qu'**une traction est exercée sur le boîtier (5) de sorte à lui conférer une forme légèrement incurvée afin de contrebalancer la pression de la mousse entre le tube de service et le boîtier.

9. Procédé selon l'une quelconque des revendications précédentes, **caractérisé en ce qu'**un couple est exercé sur la tête de mélange (3) ou sur une partie de celui-ci, de sorte à maintenir le tube (2) et le boîtier (5) à une distance radiale uniforme l'un par rapport à l'autre au cours du processus de moussage.

10. Installation destinée à être utilisé par le procédé selon l'une quelconque des revendications précédentes, laquelle installation comporte une première pièce coulissante (1) allongée pour le tube (2) à déplacer vers une tête (3) de traction-mélange et une deuxième pièce coulissante (4) allongée, apte à contenir un boîtier (5) et présentant un diamètre intérieur supérieur au diamètre extérieur de la tête de mélange (3), laquelle comporte au moins deux gicleurs (12, 13), dont chacun délivre un composant de mousse dans une chambre de mélange (8) de sorte qu'avant que le processus de moussage ne démarre, le produit de réaction dans la chambre de mélange (8) soit amené dans l'espace (10) destiné être rempli de mousse, **caractérisé en ce que** les gicleurs (12, 13) dans la chambre de mélange (8) sont pointés l'un vers l'autre dans la direction axiale du tube (2) et du boîtier (5) et **en ce que** le produit de réaction est délivré en écoulement laminaire dans un canal (9) reliant la chambre de mélange (8) audit espace de moussage (10).

11. Installation selon la revendication 10, **caractérisée en ce que** la tête de mélange (3) est constituée d'une chambre de mélange (8) et présentant sensiblement la même section transversale que celle qui existe entre le tube (2) et le boîtier (5), et **en ce que** la surface (11) radialement intérieure de la tête de mélange (3) sert de support coulissant de centrage pour le boîtier (5) par rapport au tube (2) pendant toute la durée du processus de moussage ou de formation d'une texture cellulaire.

12. Installation selon la revendication 11, **caractérisée en ce que** la surface (11) radialement intérieure de la tête de mélange est munie d'un manchon de guidage (18) séparé qui constitue ledit support coulissant de centrage sur le tube (2), le diamètre intérieur du manchon de guidage (18) étant sélectionné en correspondance au diamètre extérieur du tube choisi (2) et **en ce que** le manchon (18) de centrage et de guidage est amovible ou échangeable.

13. Installation selon l'une quelconque des revendications précédentes, **caractérisée en ce que** est prévu au moins un système de tube ou tubage pour fournir un agent de soufflage, par exemple du cyclopentane ou un gaz CFC, lequel gaz pénètre dans la chambre de mélange (8) et se mélange avec les composants de la mousse sortant des gicleurs (12, 13).

14. Installation selon l'une des revendications 10 à 13, **caractérisée en ce qu'**est prévu au moins un système de tube ou tubage (16) pour souffler un gaz à faible conductivité thermique, par exemple Ar (argon) dans l'espace (10) de formation de mousse, de sorte à exercer une contre-pression au cours du processus de moussage.

15. Installation selon l'une des revendications 10 à 14, et comprenant en outre des pompes pour délivrer les composants de mousse aux gicleurs respectifs (12, 13) dans la tête de mélange (3), **caractérisée en ce que** lesdites pompes sont reliées à la tête de mélange (3) par des tubes ou tubages rigides (14, 15, 16) et **en ce que** la tête de mélange (3) de l'ensemble avec les pompes et les tubes pour délivrer les composants de la mousse sont susceptibles de coulisser comme une seule unité le long du tube de service (2).
